# EUROPEAN PATENT APPLICATION

(11) **EP 1 681 493 A1**
(43) Date of publication of application: **19.07.2006**
(21) Application number: 04793359.3
(22) Date of filing: 28.10.2004
(51) Int. Cl.: F16H 25/22

(54) **BALL SCREW DEVICE**

(30) Priority: 30.10.2003 JP 2003370978; 30.01.2004 JP 2004024617
(71) Applicant: NSK Ltd., Tokyo 141-8560 (JP)
(72) Inventor: HAYASHI, Eiji, Fujisawa-shi, Kanagawa 251-8501 (JP); OHKUBO, Tsutomu, Fujisawa-shi, Kanagawa 251-8501 (JP)
(74) Representative: Grünecker, Kinkeldey, Stockmair & Schwanhäusser Anwaltssozietät
(86) International application number: PCT/JP2004/016379
(87) International publication number: WO 2005/043007

(57) **Abstract**

A ball screw device includes a screw shaft having a spiral first screw groove on its outer periphery; a nut having a spiral second screw groove formed on the inner periphery corresponding to the first screw groove so as to be screw-engaged with the screw shaft and having a pair of circulating holes on the side; a plurality of rolling elements rollably mounted in a load region formed between the first and second screw grooves; and a circulating member of resin having a rolling-element circulating path formed therein which scoops up the rolling elements rolling along the load region from the one of the pair of circulating holes to be guided to the outside of the nut and returns the rolling elements from the other of the pair of circulating holes to the load region, and having both ends fit in the pair of circulating holes. The circulating member is made of resin and fixed onto the nut using a metallic holding member.

## Description

### Technical Field

This invention relates to a ball screw device used in e.g. various industrial machines.

### Background Art

As such a conventional ball screw device, there is a known ball screw device as disclosed in Fig. 29. In a ball screw device 1, on a screw shaft 3 which has a spiral screw groove 2 formed on the outer periphery, a nut 6 which has a spiral screw groove 4 formed on the inner periphery corresponding to the screw groove 2 is screw-engaged.

The screw groove 4 of the nut 6 and the screw groove 2 of the screw shaft 3 are opposite to each other to form a spiral load region therebetween. In the load region, a plurality of balls 5 serving as rolling elements are mounted rollably. By rotation of the screw shaft 3 (or nut 6), the nut 6 (or screw shaft 3) moves axially through the rolling of the balls 5.

Further, a part of the side of the nut 6 constitutes a flat plane. On the flat plane, a pair of circulating holes 7 communicating between both screw grooves 2 and 4 are formed so as to straddle the screw shaft 3. Both ends of a U-shaped tubular circulating member 8 are fit in the pair of circulating holes 7. Thus, a ball circulating path, which scoops up and guides the balls 5 rolling along the load region between both screw grooves 2, 4 from the one circulating hole 7 to the outside of the nut 6 and also returns the balls 5 from the other circulating hole 7 to the load region, is formed.

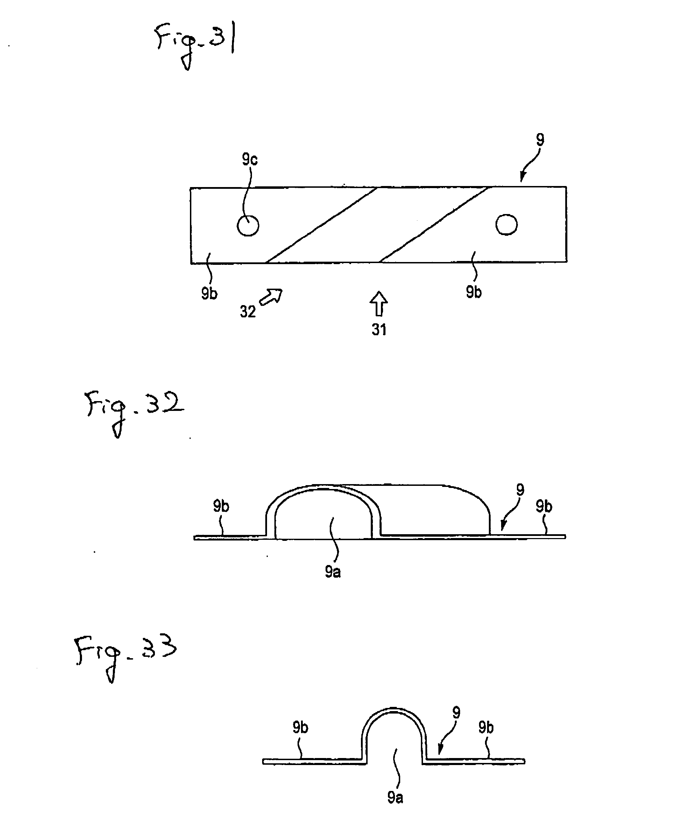

In order to fix the circulating member 8 onto the flat plane of the nut 6, a holding member 9 as shown in Fig. 30 is employed. This holding member 9 is manufactured by sheet metal press processing for mass production at low cost. As seen from Figs. 31 to 33, in a nearly central area of the lower surface of the metal sheet which extends in the axial direction of the nut 6, a groove 9a which is fit over and holding the circulating member 8 is formed obliquely and along the axial direction of the circulating member 8. Both sides of the groove 9a serve as flanges 9b. On each of the flanges 9b, a screw passing-through hole 9c is formed.

The groove 9a of the holding member 9 is fit over the circulating member 8. In this state, by tightening screws 9d passing through the screw passing-through holes 9c into screw holes (not shown) formed in the flat plane of the nut 6, the circulating member 8 is fixed onto the nut 6.

Meanwhile, such a tubular circulating member adopts an externally circulating system that can be realized in multiple rows by completely separating the balls from the screw groove of the nut from the sideward direction of the nut. The tubular circulating member, therefore, is particularly suitable to realize high load capacity of a product with a small lead. However, with high speed rotation of a recent ball screw device, when the speed at which the balls collide with the circulating member increases and so the colliding energy increases, the circulating member or screw groove (including both shoulders of the screw groove) may be broken. This hinders realization of the high speed. In order to obviate such an inconvenience, the circulating member has been proposed in which the direction of scooping up the balls is set in a tangential direction of the screw shaft and inclined in the direction of a lead angle.

However, when the circulating member intends to scoop up the balls in the tangential direction of the screw shaft and also in the direction of the lead angle of the screw groove, its shape is complicated (the shape becomes not the simple U-shape but a Z-shape) . As a result, if the circulating holes made in the flat plane of the nut are simply spot facing holes, both ends of the circulating member cannot be fit in the holes.

In order to obviate such an inconvenience, conventionally, a technique has been adopted in which the circulating holes made in the flat plane of the nut are largely spot facing and machined obliquely (tangential direction) (for example, see Japanese Utility Model Unexamined Publication No.JP-UM-A-63-132156).

### Disclosure of the Invention

Where the conventional tubular ball screw device is used in an application field in which great moment load is exerted on the ball screw device because of error in attaching the ball screw device or insufficient rigidity of the machine in which the ball screw device is built, the rolling speed of the balls 5 is changed at different positions so that the balls 5 may be jammed within the circulating member 8, thereby generating force pushing up the circulating member 8. If such a force acts on the circulating member 8, the holding member 9 manufactured by the metal sheet press working is likely to be deformed in its seat (flange 9b), which abuts on the flat plane of the nut 6, so that the circulating member 8 may float up.

In order to prevent the float-up of the circulating member 8, in the use where the strength of the holding member is required, the holding member manufactured by steel shaving is adopted. However, this holding member is manufactured one by one by machine work and so takes high machining cost.

On the other hand, in the ball screw device disclosed in the JP-UM-A-63-132156, the machining of the circulating holes formed in the flat plane of the nut is complicated. In addition, the circulating holes are large so that they may interfere with the adjacent screw groove if it is the screw groove with a small pitch such as a small lead screw or multiple thread screw.

In view of these problems, there has been also proposed a ball screw device provided with the circulating member capable of easily scooping up the balls in the tangential direction and in the direction of a lead angle, and dealing with the screw groove with the small pitch such as the small lead screw or multiple-thread screw.

In this ball screw device, the circulating member is made of synthetic resin, and at both ends, has legs to be fit in the circulating holes of the nut. Further, within each of the legs, a path for scooping up the rolling elements and a path for returning them are formed so as to be slant relative to the outer periphery of the leg, respectively.

As the method for fixing the circulating member to the nut, there have been proposed a method of directly fixing the circulating member onto the nut using e.g. screws; a method of fixing the circulating member by elastically pressing the circulating member on the nut through an annular elastic ring; or fixing the circulating member by hanging the projections formed at the legs of the circulating member on the nut side.

However, in the method of directly fixing the circulating member onto the nut using the screws, the seat of the circulating member of resin screwed is subjected to creep deformation so that tightening of the screws may be loosened.

Further, in the method of fixing the circulating member by elastically pressing the circulating member on the nut through an annular elastic ring, when inferior circulation of the balls occurs, the circulating member slightly floats up so that the entire distance of the circulating path is elongated, thereby permitting the inferior circulation to be cancelled; however, excessive float-up of the circulating member owing to the inferior circulation of the balls may have a bad influence on the circulation of the balls.

Further, in the method of fixing the circulating member by hanging the projections formed at the legs of the circulating member on the nut side, in order to avoid the float-up or come-off of the circulating member when the inferior circulation of the balls occurs, the projections formed at the legs of the circulating member must be large in size. However, the large projections make it difficult to fit the legs of the circulating member in the circulating holes, thus leading to a problem in assembling.

This invention has been accomplished in order to obviate these inconveniences. An object of this invention is to provide a ball, screw capable of surely and easily fixing a circulating member onto a nut, preventing the float-up of the circulating member when inferior circulation of rolling elements, and realizing the low cost of the circulating member.

In order to attain the above object, in accordance with this invention, there is provided a ball screw device includes a screw shaft comprising a spiral first screw groove on an outer periphery thereof; a nut screw-engaged with the screw shaft, having: a spiral second screw groove formed on an inner periphery thereof corresponding to the first screw groove; and a pair of circulating holes on side surface thereof; a plurality of rolling elements rollably mounted in a load region formed between the first and second screw grooves; a circulating member made of resin, comprising: a rolling-element circulating path formed therein, which introduces the rolling element rolling in the load region from one of the pair of circulating holes to an outside of the nut, and also returns the rolling element to the load region via other of the pair of circulating holes; and both ends fitted to the pair of circulating holes; and a metallic holding member for fixing the circulating member onto the nut.

Preferably, the holding member is manufactured by sheet metal press processing.

Preferably, the holding member is manufactured by drawing processing.

Preferably, the holding member covers 60 % or more of a part of the circulating member, which is exposed from the side surface of the nut.

Preferably, a rib for reinforcement is provided on the holding member.

Preferably, a convex is formed at a part of a bent portion of the holding member.

Preferably, the circulating member has legs which fit in the circulating holes of the nut at both ends thereof, a path for scooping up the rolling elements and a path for returning the rolling elements are formed in the legs so as to be inclined relative to an outer periphery of the leg, respectively.

The present invention provides a ball screw device having a screw shaft comprising a spiral first screw groove on an outer periphery thereof; a nut screw-engaged with the screw shaft, comprising: a spiral second screw groove formed on an inner periphery thereof corresponding to the first screw groove; and a pair of circulating holes on side surface thereof; a plurality of rolling elements rollably mounted in a load region formed between the first and second screw grooves; a circulating member made of resin, having: a rolling-element circulating path formed therein, which introduces the rolling element rolling in the load region from one of the pair of circulating holes to an outside of the nut, and also returns the rolling element to the load region via other of the pair of circulating holes; and both ends fitted to the pair of circulating holes; and a metallic holding member for fixing the circulating member onto the nut, formed by sheet metal press processing, wherein a bent portion for reinforcement is provided on a seat of the holding member for the nut.

Preferably, the circulating member comprises legs which fit in the circulating holes of the nut at both ends thereof, and a path for scooping up the rolling elements and a path for returning the rolling elements are formed in the legs so as to be inclined relative to an outer periphery of the leg, respectively.

### Brief Description of the Drawings

Fig. 1 is a view for explaining the ball screw device according to the first embodiment of the invention.
Fig. 2 is a view seen from the direction of arrow 2 in Fig. 1.
Fig. 3 is a sectional view along an axial direction in Fig. 2.
Fig. 4 is a plan view of a holding member.
Fig. 5 is a view seen from the direction of arrow 5 in Fig. 4.
Fig. 6 is a view seen from the direction of arrow 6 in Fig. 4.
Fig. 7 is a plan view of a first modification of the holding member.
Fig. 8 is a view seen from the direction of arrow 8 in Fig. 7.
Fig. 9 is a view seen from the direction of arrow 9 in Fig. 7.
Fig. 10 is a view for explaining a second modification of the holding member.
Fig. 11 is a view seen from the direction of arrow 11 in Fig. 10.
Fig. 12 is a perspective view of the holding member shown in Fig. 10.
Fig. 13 is a perspective view seen from beneath in Fig. 12.
Fig. 14 is a view for explaining a third modification of the holding member.
Fig. 15 is a view seen from the direction of arrow 14 in Fig. 14.
Fig. 16 is a plan view of the holding member shown in Fig. 14.
Fig. 17 is a view seen from the direction of arrow 17 in Fig. 16.
Fig. 18 is a view seen from the direction of arrow 18 in Fig. 16.
Fig. 19 is a perspective view of a fourth modification of the holding member.
Fig. 20 is a perspective view seen from beneath in Fig. 19.
Fig. 21 is a perspective view of a fifth modification of the holding member.
Fig. 22 is a view for explaining the holding member attached to the ball screw device according to the second embodiment of this invention.
Fig. 23 is a view seen from the direction of arrow 23 in Fig. 22.
Fig. 24 is a view seen from the direction of arrow 24 in Fig. 22.
Fig. 25 is a view seen from the direction of arrow 25 in Fig. 22.
Fig. 26 is a view showing a modification of a bent portion for reinforcement.
Fig. 27 is a view seen from the direction of arrow 27 in Fig. 26.
Fig. 28 is a view seen from the direction of arrow 28 in Fig. 26.
Fig. 29 is a main part sectional view for explaining a conventional ball screw device.
Fig. 30 is a view showing the state where a conventional holding member is attached to a circulating tube.
Fig. 31 is a view showing a conventional holding member.
Fig. 32 is a view seen from the direction of arrow 32 in Fig. 31.
Fig. 33 is a view seen from the direction of arrow 33 in Fig. 31.

### Best Mode of Carrying out the Invention

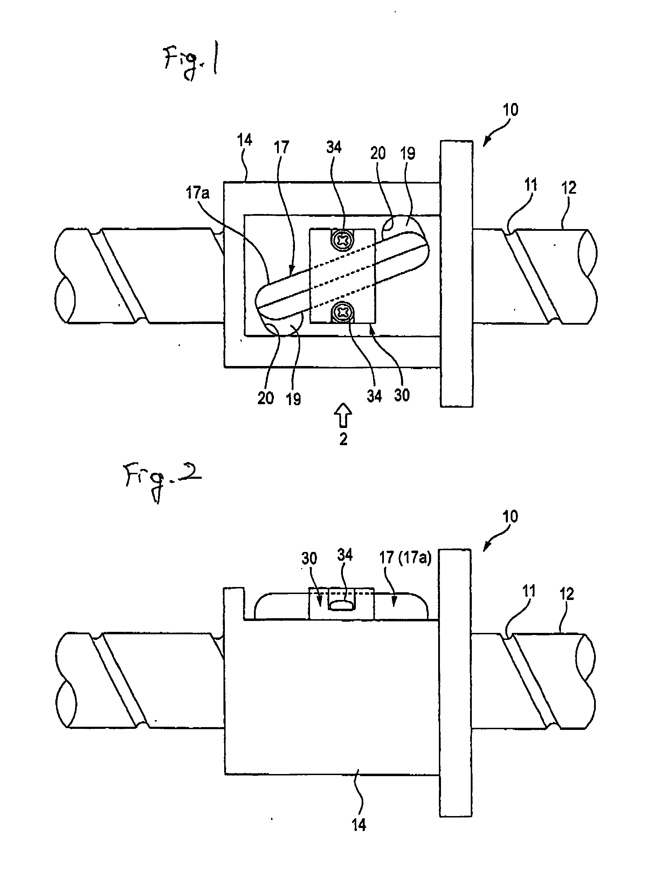

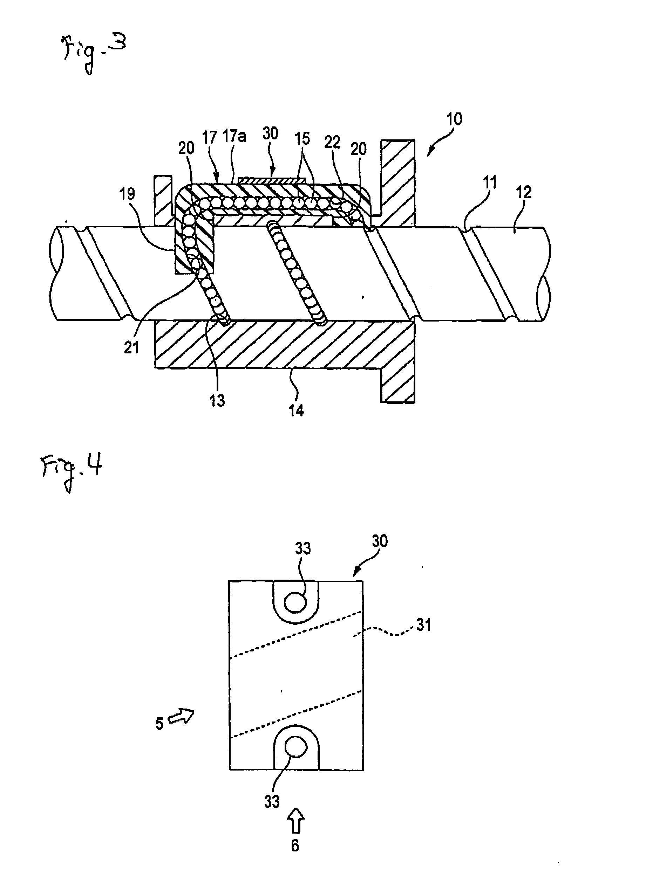

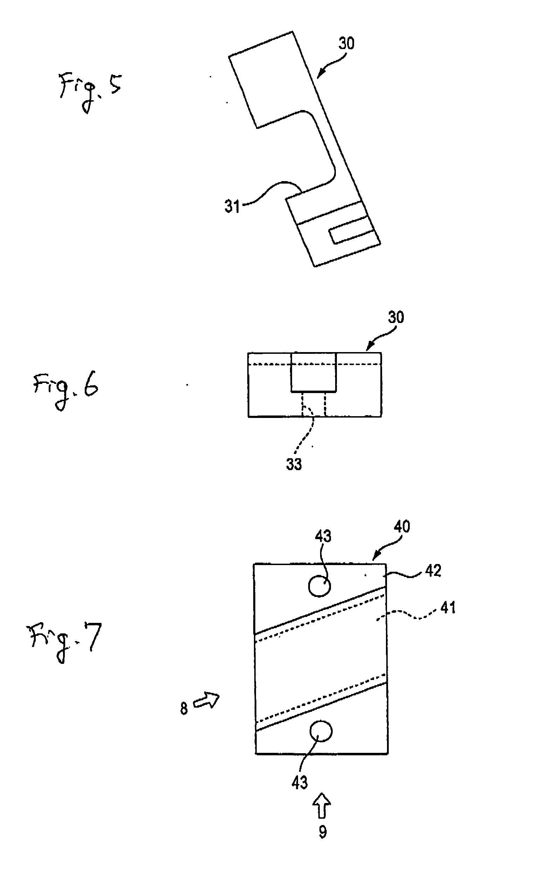

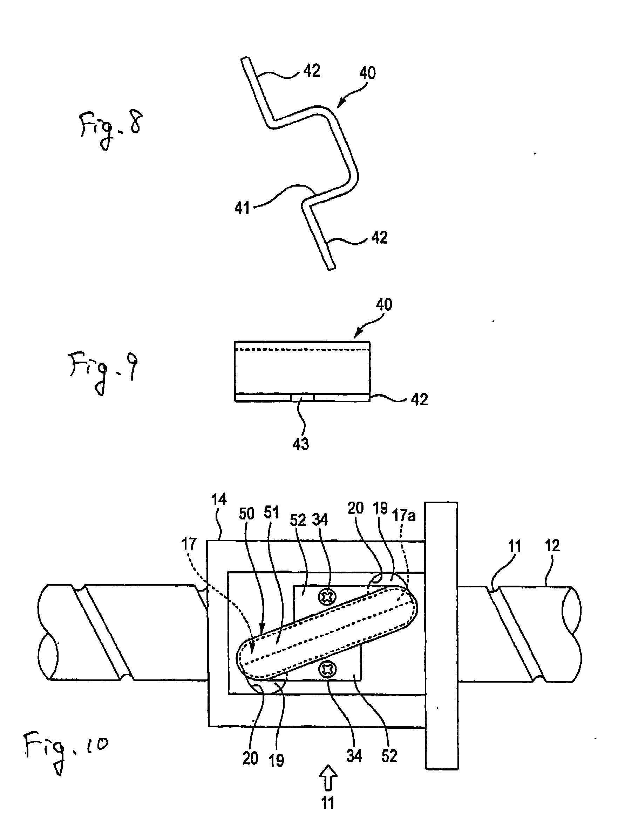

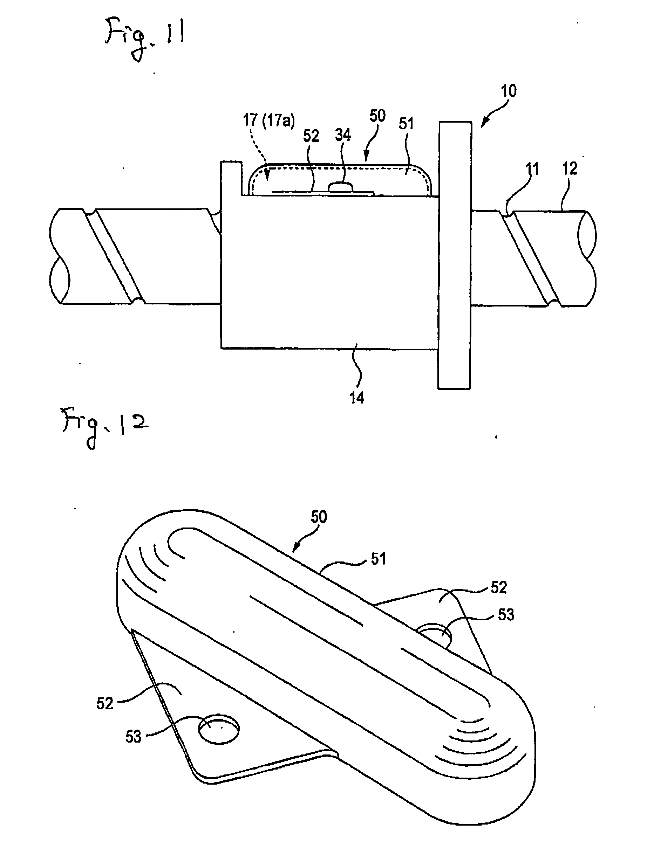

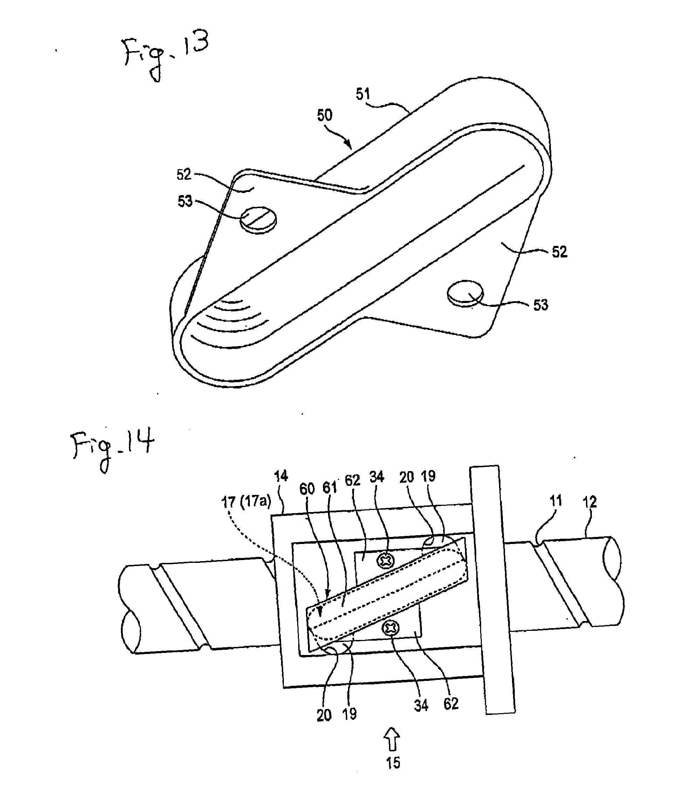

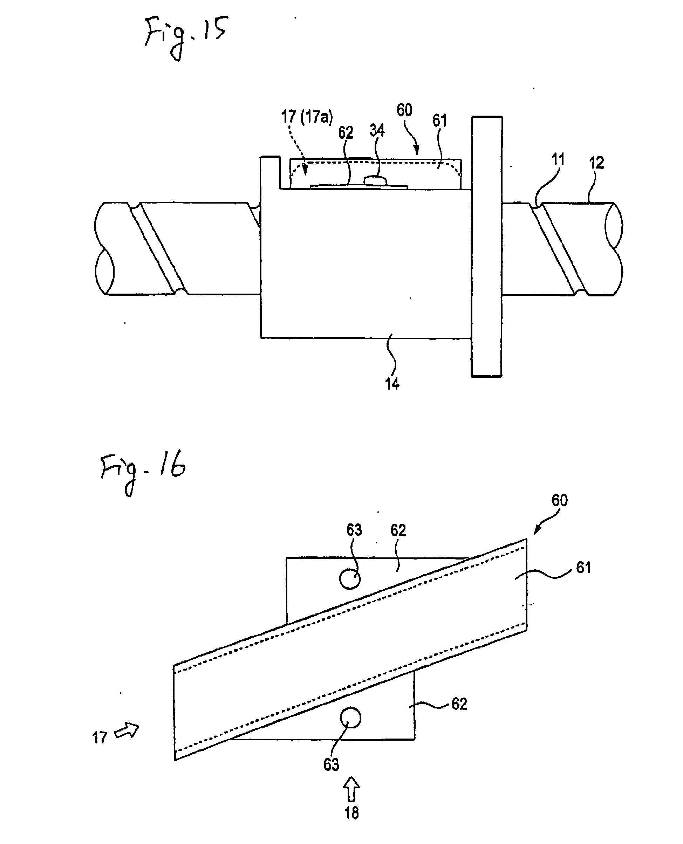

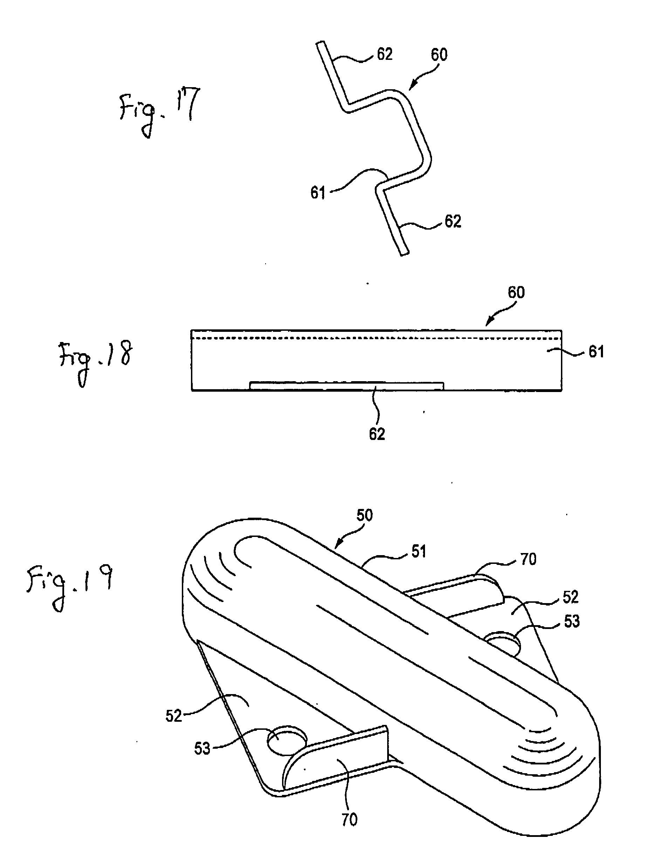

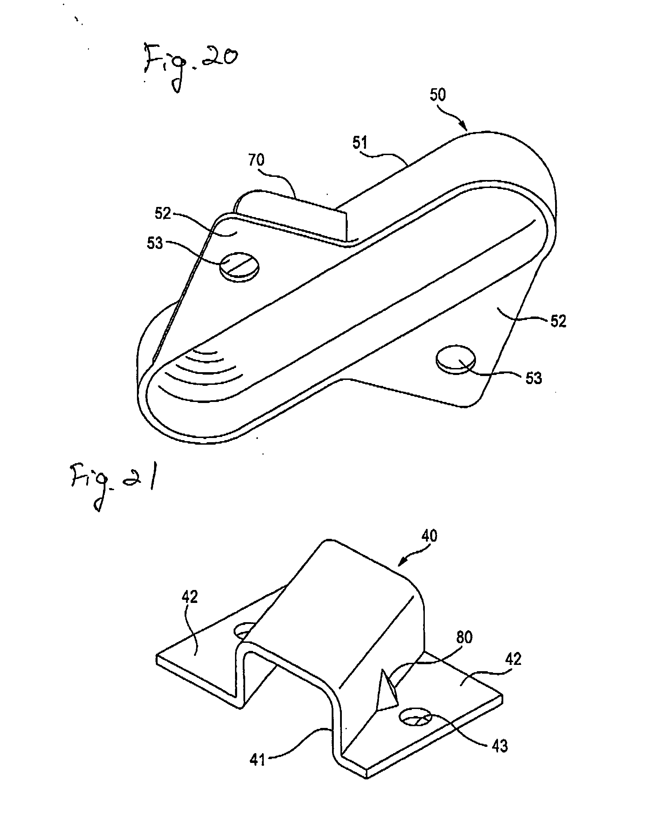

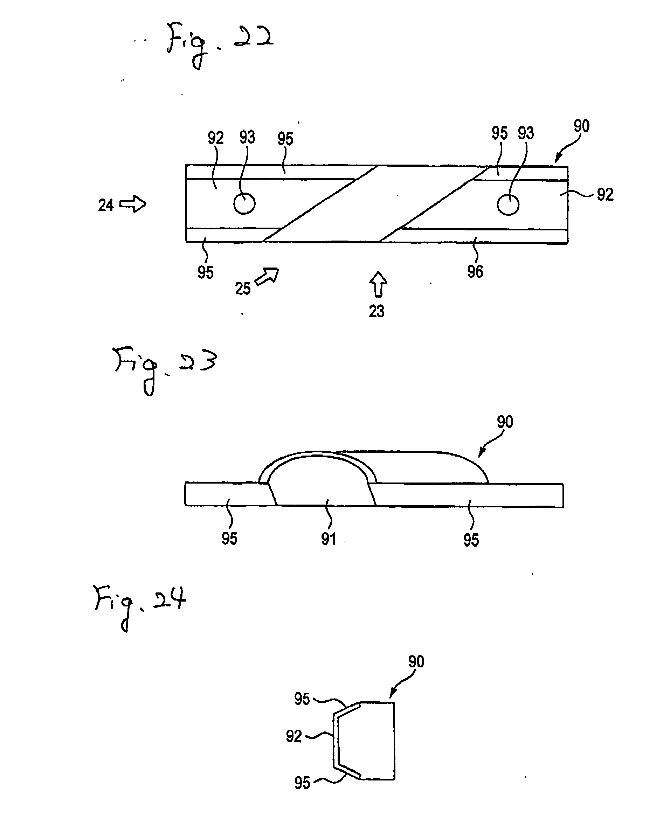

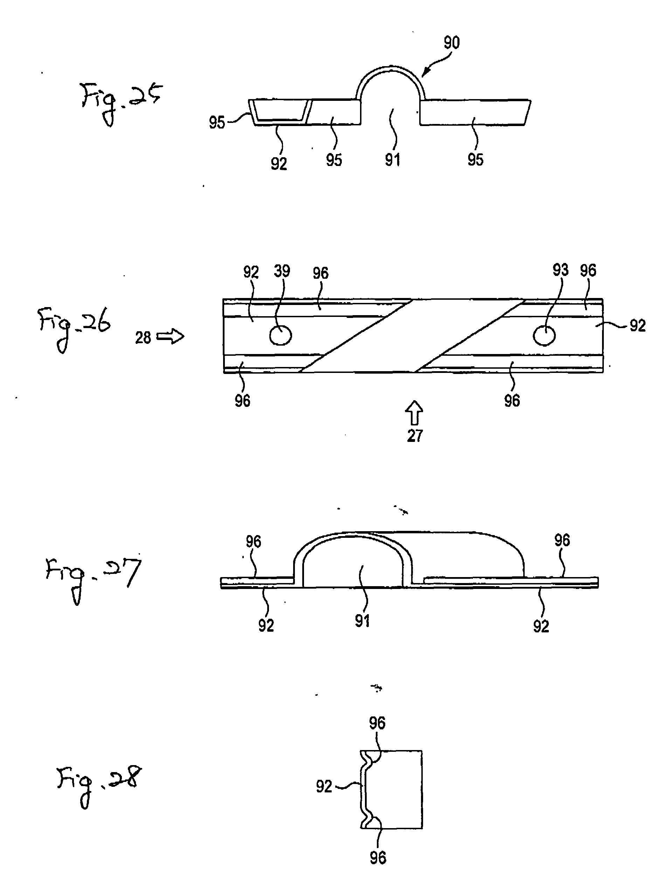

Now referring to the attached drawings, an explanation will be given of various embodiments of this invention. Fig. 1 is a view for explaining the ball screw device according to the first embodiment of this invention. Fig. 2 is a view seen from the direction of arrow 2 in Fig. 1. Fig. 3 is a sectional view along an axial direction in Fig. 2. Fig. 4 is a plan view of a holding member. Fig. 5 is a view seen from the direction of arrow 5 in Fig. 4. Fig. 6 is a view seen from the direction of arrow 6 in Fig. 4. Figs. 7 to 21 are views for explaining modifications of the holding member. Figs. 22 to 28 are views for explaining the holding member attached to the ball screw device according to the second embodiment of this invention.

As seen from Figs. 1 to 3, in a ball screw device 10 of the first embodiment of the invention, on a screw shaft 12 having a spiral screw groove 11 formed on the outer periphery, a nut 14 having a spiral screw groove 13 formed on the inner periphery corresponding to the screw groove 11 is screw-engaged.

The screw groove 13 of the nut 14 and the screw groove 11 of the screw shaft 12 are opposite to each other to form a spiral load region therebetween.

In the load region, a plurality of balls 15 serving as rolling elements are mounted rollably. By rotation of the screw shaft 12 (or nut 14), the nut 14 (or screw shaft 12) moves axially through the rolling of the balls 15.

Further, a part of the side of the nut 14 constitutes a flat plane. Onto the flat plane, attached is a circulating member 17 made of synthetic resin composed of e.g. two axially divided members bonded to each other at a dividing plane.

The circulating member 17 includes a body 17a and a pair of legs 19 each pillar or block-shaped formed on the lower surface of the body 17a to extend substantially perpendicularly to the axial direction of the screw shaft 12. The pair of legs 19 are separated from each other in the axial direction of the screw shaft 12 and separated from each other in the radial direction of the screw shaft 12. These legs 19 communicates with the load region between both screw grooves 11, 13 so that they are fit in a pair of lengthy-hole circulating holes 20 made in the flat plane of the nut 14.

Within each of the legs 19 of the circulating member 17, formed is a ball scooping-up path 21 extending in a nearly tangential direction of the screw shaft 12 and in the direction nearly consistent with the lead angle of both screw grooves 11, 13; and within the body 17a, formed is a ball path 22 connecting the ball scooping-up paths 21.

Further, by these ball scooping-up path 21 and ball path 22, within the circulating member 17, formed is a ball circulating path which scoops up and guides the balls 15 rolling along the load region between both screw grooves 11, 13 from the one of the pair of circulating hole 20 to the outside of the nut 14 and also returns the balls 15 therefrom to the load region via the other circulating hole 20.

The circulating member 17 is different from the tubular circulating member 8 adopted in the conventional ball screw device as shown in Fig. 29, in that the direction of the ball scooping-up path 21 formed in the leg can be inclined for the outer periphery of the leg 19 while simply fitting the pair of legs 19 into the circulating holes 20 made on the flat plane 14 without substantially any gaps therebetween.

Therefore, on the flat plane of the nut 14, in a structure in which the legs 19 of the circulating member 17 are simply fit in the circulating holes 20 formed perpendicularly to the screw shaft 12 as in the conventional ball screw device, the traveling direction of the balls 15 in the ball scooping-up path 21 formed within the leg 19 can be inclined in the substantially tangential direction of the screw shaft 12 and in the direction nearly coincident with the lead angle of both screw grooves 11, 13. Thus, the nut 14 can be easily machined and the freedom of design of the scooping-up path and returning path of the balls 15 can be improved.

Now, in this embodiment, with the legs 19 of the circulating member 17 made of resin being fit in the circulating holes 20 of the nut 14, the circulating member 17 is fixed onto the nut 14 using a metallic holding member 30.

In the holding member 30, as seen from Figs. 4 to 6, in a nearly central area of the lower surface of box-shaped steel which elongates in the radial direction of the nut 14, a groove 31 which is fit over the body 17a of the circulating member 17 and holds the body 17a is formed obliquely along the axial direction of the body 17a. On both sides of the groove 31, screw passing-through holes 33 are formed.

The groove 31 of the holding member 30 is fit over the body 17a of the circulating member 17. In this state, by tightening screws 34 passing through the screw passing-through holes 33 into screw holes (not shown) formed in the flat plane of the nut 14, the circulating member 17 is fixed onto the nut 14.

As described above, in this embodiment, the circulating member 17 made of resin is fixed onto the nut 14 using the metallic holding member 30. So, there is no fear of loosening the tightening of the screws 34 owing to creep deformation of the seat of the resin circulating member 17. Thus, the circulating member 17 can be surely and easily fixed onto the nut 14. In addition, the float-up of the circulating member 17 can be prevented even when inferior circulation of the balls 15 occurs.

Next, various modifications of the holding member will be explained.

Figs. 7 to 9 show a first modification of the holding member. In a holding member 40, in a nearly central area of the lower surface of a metallic sheet which elongates in the radial direction of the nut 14, a groove 41 which is fit over the body 17a of the circulating member 17 to hold the body 17a is formed obliquely along the axial direction of the body 17a by sheet metal press processing or metal-sheet bending processing. Both sides of the groove 41 serve as flanges 42 and a screw passing-through hole 43 is formed in each of the flanges 42.

The groove 41 of the holding member 40 is fit over the body 17a of the circulating member 17. In this state, by tightening screws 34 passing through the screw passing-through holes 43 into screw holes (not shown) formed in the flat plane of the nut 14, the circulating member 17 is fixed onto the nut 14.

As described above, by subjecting the metallic sheet to the sheet metal press processing or metal-sheet bending, the holding member 40 can be easily manufactured at low cost.

Figs. 10 to 13 show a second modification of the holding member.

A holding member 50 is manufactured by subjecting a metallic sheet to drawing by a pressing machine. The holding member 50 includes a cap 51 which covers the nearly entire area of a portion of the circulating member 17 exposed from the side surface of the nut 14 (in this modification, the entire area of the body 17a of the circulating member 17) and flanges 52 formed on both sides in the width direction of the cap 51. At the flanges 52, screw passing-through holes 53 are formed.

The cap 51 of the holding member 50 is fit over the body 17a of the circulating member 17. In this state, by tightening screws 34 passing through the screw passing-through holes 53 into screw holes (not shown) formed in the flat plane of the nut 14, the circulating member 17 is fixed onto the nut 14.

In accordance with such a structure, where the inferior circulation of the balls 15 occurs, even if the balls 15 internally push the circulating member 17 to forcibly expand the mating line of the circulating member 17, since the nearly entire area of the circulating member 17 is covered with the cap 51, the mating line can be prevented from being opened. In addition, the nearly entire area of the circulating member 17 is covered with the cap 51, the sound externally emanated from the inside of the circulating member 17 can be insulated to reduce noise.

Figs. 14 to 18 show a third modification of the holding member.

A holding member 60 includes a cap 61 which covers the area except both ends of the body 17a of the circulating member 17 and flanges 62 formed on both sides in the width direction of the cap 61. At the flanges 62, screw passing-through holes 63 are formed.

The cap 61 of the holding member 60 is fit over the body 17a of the circulating member 17. In this state, by tightening screws 34 passing through the screw passing-through holes 63 into screw holes (not shown) formed in the flat plane of the nut 14, the circulating member 17 is fixed onto the nut 14.

Unlike the holding member covering the nearly entire area of the circulating member 17 according to the second modification, the holding member which exposes a part of the circulating member 17 as in this modification can be adopted. However, in this case, preferably, the holding member has a shape covering 60 % or more of the part of the circulating member 17 exposed from the side surface of the nut 14.

The holding member having such a structure can be easily manufactured by metal-sheet bending. So this holding member is suitable to not the mass production in large-volume using the press working, but to the production in small-volume at low cost. However, it is needless to say that this holding member may be mass-produced by means of press working.

Meanwhile, in the case of the holding member using the bent sheet as explained referring to Figs. 7 to 18, if the inferior circulation of the balls 15 occurs for any reason, for example, the balls 15 jammed in the circulating path push up the circulating member so that the sheet around the screw passing-through holes may be bent and so the circulating member may float up. In order to obviate such an inconvenience, ribs for reinforcement may be provided between the portion holding the circulating member 17 in contact therewith and the portions fixed onto the nut 14 by screwing. Such an example is shown as a fourth modification in Figs. 19 and 20. In this example, the holding member 50 as shown in Figs. 12 and 13 is provided with the ribs. Namely, ribs 70 are provided between the cap 51 holding the circulating member 17 in contact therewith and the flanges 52 fixed onto the nut 14 by screwing.

In place of the ribs, convexes for reinforcement may be provided at a part of the bent area of the sheet. Such an example is shown as a fifth modification in Fig. 21. In this example, a convex 80 is provided at a part of the bent area of the holding member 40 according to the first modification as shown in Figs. 7 to 18. In accordance with such a structure, the convexes can be easily machined by press working and also strength can be given to the holding member, thereby preventing the float-up of the circulating member 17.

It should be noted that this invention should not be limited to the first embodiment and its modifications described above, but maybe appropriately modified without departing from the gist of this invention.

For example, in the first embodiment described above, the circulating member made of resin is adopted which has the legs 19 fit in the circulating holes 20 of the nut 14 at both ends, and within each of the legs 19, the path 21 for scooping up the rolling elements 15 and path for returning them which are formed so as to be slant relative to the outer periphery of the leg 21, respectively. However, without being limited to such an example, as long as the circulating member is made of resin, this invention may be applied to the holding member of the tubular circulating member 8 of the ball screw device as shown in Fig. 29.

Next, referring to Figs. 22 to 28, an explanation will be given of the holding member attached to the ball screw device according to the second embodiment of this invention. In this embodiment, using the symbols shown in Fig. 30, the holding member for holding the tubular circulating member (made of metal or resin) will be taken as an example.

A holding member 90 is manufactured by sheet metal press processing. As seen from Figs. 22 to 24, in a nearly central area of the lower surface of a metallic sheet which elongates in the radial direction of the nut 6, a groove 91 which is fit over the tubular circulating member 8 to hold the circulating member 8 is formed obliquely along the axial direction of the circulating member 8. Both sides of the groove 91 serve as flanges 92 and a screw passing-through hole 93 is formed in each of the flanges 92.

Now, in this embodiment, on both sides in the width direction of the flange 92 (seat) of the holding member 90, bent segments 95 for reinforcement flexed slant-upward are formed integrally.

The groove 91 of the holding member 90 is fit over the circulating member 8. In this state, by tightening screws 9d passing through the screw passing-through holes 93 into screw holes (not shown) formed in the flat plane of the nut 6, the circulating member 8 is fixed onto the nut 6.

As described above, in this embodiment, the circulating member 8 is fixed onto the nut 6 using the metallic holding member 90 manufactured by sheet metal press processing. In addition, the bent segment 95 for reinforcement is provided at the flange 92 serving as the seat for the nut 6 of the holding member 90, thereby increasing the strength of the flange 92. For this reason, the float-up of the circulating member 8 can be prevented even when inferior circulation of the rolling elements occurs. Further, since the holding member is manufactured by the sheet metal press processing, the holding member capable of being mass-produced at low cost can be provided.

It should be noted that this invention should not be limited to the second embodiment, but may be appropriately modified without departing from the gist of this invention.

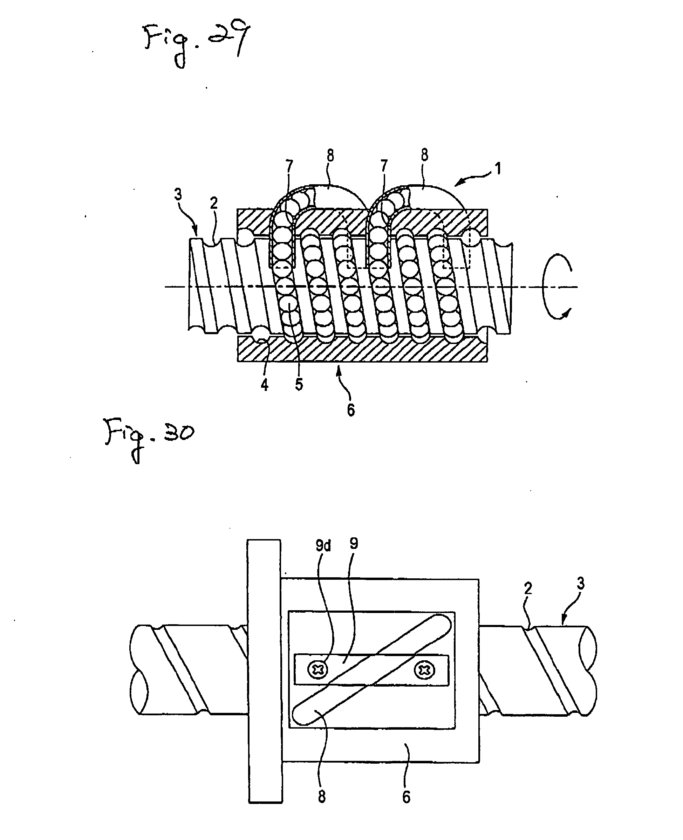

For example, in the above second embodiment, on both sides in the width direction of the flange 92 (seat) of the holding member 90, bent segments 95 for reinforcement flexed aslant-upward were formed integrally. However, the number of the bent segments and shape thereof should not be limited, but as seen from Figs. 26 to 28, convex bend segments 96 may be integrally formed on the upper surface of the flange 92.

Further, in the above second embodiment, the single circulating member was held by the single holding member 90. However, without being limited to such a manner, a plurality of circulating members may be held by the single holding member 90.

Further, in the above second embodiment, this invention was applied to the holding member of the tubular circulating member 8. However, in place of this, this invention may be applied to the circulating member, as seen from Figs. 1 to 3, which has the legs 19 fit in the circulating holes 20 of the nut 14 at both ends, and within each of the legs 19, the path 21 for scooping up the rolling elements 15 and path for returning them which are formed so as to be slant relative to the outer periphery of the leg 21, respectively.

As understood from the description hitherto made, in the first embodiment of this invention, the circulating member of resin is fixed onto the nut using the metallic holding member 30. So, there is no fear of loosening the tightening of the screws owing to creep deformation of the seat of the resin circulating member. Thus, the circulating member can be surely and easily fixed onto the nut. In addition, the float-up of the circulating member can be prevented even when inferior circulation of the rolling elements occurs.

Further, in the second embodiment of this invention, the circulating member is fixed onto the nut using the metallic holding member manufactured by sheet metal press processing. In addition, the bent segment for reinforcement is provided on the seat of the holding member for the nut, thereby increasing the strength of the nut on the seat. For this reason, the float-up of the circulating member can be prevented even when inferior circulation of the rolling elements occurs. Further, since the holding member is manufactured by the sheet metal press processing, the holding member capable of being mass-produced at low cost can be provided.

Further, in accordance with both first and second embodiments, if the circulating member is adopted which has the legs fit in the circulating holes of the nut at both ends and within each of the legs, the path scooping up for the rolling elements and path for returning them which are formed so as to be slant relative to the outer periphery of the leg, respectively, the ball screw device can be provided which can easily realize the scooping-up of the rolling elements in the tangential direction and in the direction of the lead angle, and can deal with the screw groove with a small pitch such as a small lead screw or multiple thread screw.

This invention has been explained in detail and referring to the specific embodiments. However, it is apparent to those skilled in the art that this invention can be modified and changed in various manners without departing the spirit and scope of the invention.

This application is based on Japanese Patent Application (Application No. JP.2003-370978) filed on October 30, 2003 and Japanese Patent Application (Application No. 2004-024617) filed on January 30, 2004. The disclosure of these applications is incorporated herein by reference.

### Industrial Applicability

This invention can be employed in a ball screw device used in e.g. various industrial machines.

## Claims

1. A ball screw device comprising:
a screw shaft comprising a spiral first screw groove on an outer periphery thereof;
a nut screw-engaged with the screw shaft, comprising:
a spiral second screw groove formed on an inner periphery thereof corresponding to the first screw groove; and
a pair of circulating holes on side surface thereof;
a plurality of rolling elements rollably mounted in a load region formed between the first and second screw grooves;
a circulating member made of resin, comprising:
a rolling-element circulating path formed therein, which introduces the rolling element rolling in the load region from one of the pair of circulating holes to an outside of the nut, and also returns the rolling element to the load region via other of the pair of circulating holes; and
both ends fitted to the pair of circulating holes; and
a metallic holding member for fixing the circulating member onto the nut.

2. The ball screw device according to claim 1, wherein the holding member is manufactured by sheet metal press processing.

3. The ball screw device according to claim 2, wherein the holding member is manufactured by drawing processing.

4. The ball screw device according to claim 1, wherein the holding member covers 60 % or more of a part of the circulating member, which is exposed from the side surface of the nut.

5. The ball screw device according to claim 1, wherein a rib for reinforcement is provided on the holding member.

6. The ball screw device according to claim 1, wherein a convex is formed at a part of a bent portion of the holding member.

7. The ball screw device according to claim 1, wherein the circulating member comprises legs which fit in the circulating holes of the nut at both ends thereof, and
wherein a path for scooping up the rolling elements and a path for returning the rolling elements are formed in the legs so as to be inclined relative to an outer periphery of the leg, respectively.

8. A ball screw device comprising:
a screw shaft comprising a spiral first screw groove on an outer periphery thereof;
a nut screw-engaged with the screw shaft, comprising:
a spiral second screw groove formed on an inner periphery thereof corresponding to the first screw groove; and
a pair of circulating holes on side surface thereof;
a plurality of rolling elements rollably mounted in a load region formed between the first and second screw grooves;
a circulating member made of resin, comprising:
a rolling-element circulating path formed therein, which introduces the rolling element rolling in the load region from one of the pair of circulating holes to an outside of the nut, and also returns the rolling element to the load region via other of the pair of circulating holes; and
both ends fitted to the pair of circulating holes; and
a metallic holding member for fixing the circulating member onto the nut, formed by sheet metal press processing,
wherein a bent portion for reinforcement is provided on a seat of the holding member for the nut.

9. The ball screw device according to claim 8, wherein the circulating member comprises legs which fit in the circulating holes of the nut at both ends thereof, and
wherein a path for scooping up the rolling elements and a path for returning the rolling elements are formed in the legs so as to be inclined relative to an outer periphery of the leg, respectively.
